# EUROPÄISCHE PATENTSCHRIFT

(11) **EP 2 441 563 B1**
(45) Veröffentlichungstag und Bekanntmachung des Hinweises auf die Patenterteilung: **09.11.2016**
(21) Anmeldenummer: 11182685.5
(22) Anmeldetag: 26.09.2011
(51) Int. Cl.: B29C 49/42, B29C 49/68, B29C 49/64, B29C 49/78

(54) **Vorrichtung und Verfahren zum Herstellen von Kunststoffbehältnissen mit variabler Stationsabschaltung**
Device for producing plastic containers with variable station switch-off
Dispositif et procédé de fabrication de récipients en plastique dotés d'un arrêt de station variable

(30) Priorität: 15.10.2010 DE 102010048417
(43) Veröffentlichungstag der Anmeldung: 18.04.2012
(73) Patentinhaber: Krones AG, 93073 Neutraubling (DE)
(72) Erfinder: Senn, Konrad, 93059 Regensburg (DE)
(74) Vertreter: Bittner, Bernhard

(56) Entgegenhaltungen:
- EP-A2- 1 837 157
- WO-A1-2006/105769
- DE-A1- 10 121 160
- DE-A1-102008 021 527

## Beschreibung

Die vorliegende Erfindung bezieht sich auf eine Vorrichtung zum Herstellen von Kunststoff-behältnissen und insbesondere auf eine Streckblasmaschine. Derartige Vorrichtungen sind aus dem Stand der Technik seit langem bekannt. Dabei ist es üblich, dass Kunststoffvorformlinge zunächst in einer Heizeinrichtung erwärmt und anschließend die so erwärmten Kunststoffvorformlinge an eine Blasmaschine weitergegeben und dort zu Kunststoffbehältnissen expandiert werden.

EP-A2-1 837 157 offenbart den Oberbegriff der Ansprüche 1 und 9.

Dabei ist es im Stand der Technik üblich, dass derartige Streckblasmaschinen stets mit einer konstanten Ausbringleistung betrieben werden. Das Abschalten einzelner Stationen während des Betriebs ist dabei üblicherweise nicht möglich, ohne einen Verlust der Kunststoffvorformlinge in Kauf zu nehmen. Weiterhin ist es üblich, dass derartige Heizeinrichtungen und die nachgeschalteten Streckblasmaschinen in einem Block betrieben werden, bei denen diese Maschinen miteinander gekoppelt sind und die einzelnen Behandlungsstationen der Maschinen untereinander über Transfersterne fest miteinander verknüpft sind bzw. die Geschwindigkeiten aufeinander angepasst sind.

Falls nun eine Behandlungsstation in einer der Blasmaschine nachgeschalteten Maschine ausfällt, wie beispielsweise ein Etikettieraggregat, so kann die Streckblasmaschine nach heutigem Stand der Technik zwar den betreffenden Kunststoffvorformling oder das Behältnis ausschleusen, die jeweiligen ausgeschleusten Behältnisse sind jedoch dann Ausschuss. Der vorliegenden Erfindung liegt daher die Aufgabe zugrunde, eine Vorrichtung zum Herstellen von Kunststoffbehältnissen zu schaffen, die auch bei Ausfall nachfolgender Aggregate die Menge an entstehendem Ausschuss reduziert. Daneben soll die Erfindung auch eine Möglichkeit zur Verfügung stellen, um eine Leistungsregelung bei konstanter Maschinendrehzahl zu ermöglichen (beispielsweise, wenn Etiketten gewechselt werden oder während eines Anfahrens einer nachgeschalteten Fülleinrichtung zum Befüllen der Behältnisse).

Dies wird erfindungsgemäß durch die Gegenstände der unabhängigen Ansprüche erreicht.

Vorteilhafte Ausführungsformen und Weiterbildungen sind Gegenstand der Unteransprüche.

Eine Vorrichtung zum Herstellen von Kunststoffbehältnissen weist eine Heizeinrichtung zum Erwärmen von Kunststoffvorformlingen und eine in einer Transportrichtung der Kunststoffvorformlinge der Heizeinrichtung nachgeordnete Umformungseinrichtung zum Umformen von Kunststoffvorformlingen zu Kunststoffbehältnissen auf. Weiterhin ist eine Transporteinrichtung vorgesehen, welche mittels einer Vielzahl von Transportelementen die Kunststoffvorformlinge vereinzelt durch die Heizeinrichtung transportiert. Dabei weist die Vorrichtung eine Sperreinrichtung zur zeitweiligen Unterbrechung der Zuführung der Kunststoffvorformlinge an die Heizeinrichtung auf und diese Sperreinrichtung ermöglicht eine Unterbrechung der Zuführung für einzelne Kunststoffvorformlinge.

Bevorzugt erlaubt die Sperreinrichtung durch eine gezielte Unterbrechung die Erzeugung von vorgegebenen Lücken in der durch die Heizeinrichtung transportierten Reihe an Kunststoffvorformlingen.

Die Heizeihrichtung weist eine Vielzahl von Heizelementen zum Erwärmen einzelner Kunststoffvorformlinge oder Gruppen von Kunststoffvorformlingen auf. Diese Heizelemente sind dabei bevorzugt zum individuellen Erwärmen einzelner Kunststoffvorformlinge oder Gruppen von Kunststoffvorformlingen geeignet. Während im Stand der Technik üblicherweise sämtliche Kunststoffvorformlinge an allen Heizelementen vorbeigeführt werden, wird nunmehr vorgeschlagen, dass die Vorrichtung eine Vielzahl von Heizelementen aufweist, denen während des Erwärmungsvorgangs die Kunststoffvorformlinge zugeordnet sind. Dabei können diese Heizelemente beispielsweise einzelne Kunststoffvorformlinge oder Gruppen von Kunststoffvorformlingen aufnehmen und diese erwärmen. Damit wird eine individuelle Erwärmung der Kunststoffvorformlinge durch die jeweiligen Heizelemente ermöglicht.

Es wird weiterhin vorgeschlagen, dass die Kunststoffvorformlinge bereits vor dem Einführen in die Heizeinrichtung blockiert, genauer, mittels einer Sperreinrichtung zu einem späteren Zeitpunkt der Heizeinrichtung zugeführt werden, was bewirkt, dass diese Kunststoffvorformlinge auch zu einem späteren Zeitpunkt noch für den Prozess zur Verfügung stehen und nicht Ausschuss sind. Auf diese Weise wird erreicht, dass innerhalb der Transporteinrichtung einzelne Lücken entstehen und entsprechend einzelne Stationen der Umformungseinrichtung nicht mit Kunststoffvorformlingen besetzt werden. Entsprechend ist es auch möglich, dass der Blasmaschine nachgeschaltete Aggregate an einzelnen Positionen, die gezielt ausgewählt werden können, nicht mit Kunststoffvorformlingen der Behältnisse besetzt sind.

Vorteilhaft werden die Kunststoffvorformlinge derart durch die Heizeinrichtung transportiert, dass sie sich gegenseitig während der Erwärmung nicht thermisch beeinflussen. Bei einer weiteren vorteilhaften Ausführungsform ist zwischen den einzelnen Kunststoffvorformlingen während deren Transport durch die Heizeinrichtung und/oder während deren Erwärmung jeweils wenigstens ein Wandungselement angeordnet. Dieses Wandungselement kann dabei beispielsweise Bestandteil einer Heizkavität zum Erwärmen der Kunststoffvorformlinge sein. Auch durch dieses Wandungselement wird ein (ungewünschter) Wärmeübertrag zwischen den Kunststoffvorformlingen zumindest teilweise und bevorzugt vollständig unterbunden. Auch wäre es möglich, dass ein Abstand zwischen den einzelnen Kunststoffvorformlingen so groß ist, dass es ebenfalls nicht zu einem Wärmeübertrag zwischen zwei benachbarten Kunststoffvorformlingen kommen kann.

Bei aus dem Stand der Technik bekannten Heizeinrichtungen werden üblicherweise die Kunststoffvorformlinge in einer Reihe an Heizelementen, wie beispielsweise Infrarotheizelementen, vorbeigeführt. Werden nun aus derartigen Reihen einzelne Kunststoffvorformlinge ausgesondert, werden auch die jeweiligen vorhergehenden und nachfolgenden Kunststoffvorformlinge nicht in der vorgesehenen Weise erwärmt, da für die gleichmäßige Erwärmung die besagte geschlossene Reihe der Kunststoffvorformlinge erforderlich ist. Durch das Vorsehen einer Vielzahl von Heizelementen zum Erwärmen einzelner Kunststoffvorformlinge ist, wie erwähnt, eine individuelle Erwärmung möglich und auf diese Weise ist es auch möglich, einzelne Kunststoffvorformlinge zu entnehmen.

Bei einer weiteren vorteilhaften Ausführungsform sind die Heizelemente einzeln abschaltbar.

Vorteilhaft sind die Heizelemente bewegbar angeordnet. Dabei ist es möglich, dass die Heizelemente beispielsweise als Heizkavitäten an einem Trägerrad angeordnet sind und zur Aufnahme der Kunststoffvorformlinge geeignet sind. Vorteilhaft weisen daher die Heizelemente Aufnahmeräume zum Aufnehmen der Kunststoffvorformlinge auf. Diese Aufnahmeräume können dabei die Kunststoffvorformlinge im Wesentlichen voll umfänglich, umgeben, vorteilhaft jedoch zumindest einen Grundkörper der Kunststoffvorformlinge, der unterhalb des Gewindes der Kunststoffvorformlinge angeordnet ist, erwärmen. Bevorzugt bewegen sich die Heizelemente wenigstens zeitweise gemeinsam mit den zu erwärmenden Kunststoffvorformlingen.

Vorteilhaft weist Vorrichtung eine Steuerungseinrichtung zum Steuern einer Ausstoßleistung der Vorrichtung auf. Dabei kann insbesondere durch den Einsatz der Sperreinrichtung eine Ausstoßleistung der Vorrichtung d.h. die Anzahl der erwärmten bzw. umgeformten Behältnisse pro Zeiteinheit gesteuert bzw. geregelt werden.

Dabei ist es beispielsweise möglich, dass die Steuerungseinrichtung ein Signal von einer nachgeschalteten Behandlungsmaschine (wie z.B. einer Etikettiermaschine oder einer Füllmaschine empfängt, welches anzeigt, dass die Leistung gedrosselt werden muss (etwa aufgrund eines Fehlers, eines Etikettenwechsels, eines Aufschäumens von CO₂-haltigen Getränken oder dergleichen).

Da die Sperreinrichtung bewirkt, dass einzelne Heizelemente unbesetzt sind, weist die Vorrichtung vorteilhaft eine der Heizeinrichtung bzw. einer Blaseinrichtung in der Transportrichtung der Kunststoffbehältnisse nachgeschaltete Ausgleichseinrichtung auf, welche diese so entstandenen Lücken der Kunststoffvorformlinge bzw. bevorzugt später der umgeformten Kunststoffbehältnisse (insbesondere vor dem Füller, der Etikettiermaschine oder dem Blasrad) wieder ausgleicht bzw. mit Kunststoffbehältnissen besetzt. Hierfür wäre es möglich, beispielsweise nach der Heizeinrichtung, bevorzugt jedoch nach der Blaseinrichtung einen Lufttransport vorzusehen, in dem die Kunststoffbehältnisse nicht vereinzelt sondern aneinander gefördert werden. Auch könnte der Heizeinrichtung oder bevorzugt der Blaseinrichtung ein Verteilstern nachgeschaltet sein, der ebenfalls einen Ausgleich von entstandenen Lücken bewirkt. Ein derartiger Verteilstern wurde beispielsweise in der DE 10 2006 023 531 beschrieben. Der Inhalt dieser Druckschrift wird hiermit durch Bezugnahme auch vollständig zum Gegenstand der vorliegenden Anmeldung gemacht.

Bevorzugt steuert die Steuerungseinrichtung in Abhängigkeit von einem Signal eines in der Transportrichtung der Kunststoffvorformlinge befindlichen vor oder nachgeschalteten Aggregats die Ausstoßleistung der Vorrichtung. Vorteilhaft ist dieses Aggregat aus einer Gruppe von Aggregaten ausgewählt, welche Streckblasmaschinen, Etikettiermaschinen, Fülleinrichtungen für die Behältnisse, Sterilisationseinrichtungen für die Behältnisse oder dergleichen enthält. Dieses Signal kann dabei von der Blaseinrichtung selbst stammen und sich beispielsweise aus einem Hochfahren oder Drosseln dieser Blaseinrichtung ergeben.

Bei einer weiteren vorteilhaften Ausführungsform weist die Vorrichtung eine Vielzahl von Reckstangen auf, um die Kunststoffvorformlinge in ihrer Längsrichtung zu dehnen. Diese Reckstangen weisen dabei bevorzugt elektrische Antriebe auf und sind besonderes vorteilhaft unabhängig voneinander steuerbar. Im Stand der Technik werden üblicherweise stationäre Reckkurven verwendet, welche damit eine einheitliche Bewegung aller Reckstangen bewirken. Durch die hier vorgeschlagenen elektrischen Antriebseinrichtungen (etwa in Form von Servo- oder Linearmotoren) können die Bewegungen der einzelnen Reckstangen individuell gesteuert werden. Auf diese Weise kann auch eine von der Maschinengeschwindigkeit abhängige Reckgeschwindigkeit erreicht werden.

Bei einer weiteren vorteilhaften Ausführungsform handelt es sich bei der Heizeinrichtung um eine Heizeinrichtung zur individuellen Erwärmung der Preforms, besonders bevorzugt um eine Mikrowellen-, Laser- oder STIR-Heizung. Die mikrowellenbasierte Heizeinrichtung weist dabei bevorzugt eine Mikrowellenerzeugungseinheit auf, wie ein Magnetron, sowie auch besonders bevorzugt einen Hohlleiter, der die erzeugten Mikrowellen an einen Resonator weitergibt.

Der Resonator kann dabei auch der besagte Aufnahmeraum für die Kunststoffvorformlinge sein.

Bei einer weiteren vorteilhaften Ausführungsform weist die Umformungseinrichtung eine Vielzahl von Blasstationen zum Umformen der Kunststoffvorformlinge auf und eine Zuordnungseinrichtung ist vorgesehen, die jedem Transportelement der Heizeinrichtung eindeutig eine Blasstation zuordnet. So ist es beispielsweise möglich, falls ein Fehler einzelner Blasstationen festgestellt wird, dass in Folge dieses Fehlers auch diejenigen Kunststoffvorformlinge, die mit einem dieser Blasstation zugeordneten Transportelement transportiert werden, durch einen Stopper aufgehalten werden, um schließlich erst der nächsten Heizkavität zugeführt zu werden. Es wäre jedoch auch möglich, dass die besagte Zuordnung in umgekehrter Weise erfolgt, dass also beispielsweise, falls in der Heizeinrichtung ein Fehler eines bestimmten Heizelements erkannt wird, der entsprechende Kunststoffvorformling hier nach dem Heizvorgang ausgeschleust wird und daher für diesen Kunststoffvorformling kein Blasvorgang stattfindet.

Auch wäre es möglich, dass einem bestimmten Heizelement während des Arbeitsbetriebs jede n-te von m Blasstationen zugeordnet ist, wenn n die Anzahl der Heizelemente ist oder einer bestimmten Blasstation jedes n-te von m Heizelementen zugeordnet ist, wenn n die Anzahl der Blasstationen ist. Bevorzugt kann jedenfalls durch die Zuordnungseinrichtung für jede Blasstation festgestellt werden, welches Heizelement den Kunststoffvorformling transportiert, der in diese betreffende Blasstation gelangen wird.

Bei einer weiteren vorteilhaften Ausführungsform weist die Vorrichtung eine Fülleinrichtung zum Befüllen der Behältnisse auf, wobei die Fülleinrichtung der Umformungseinrichtung in der Transportrichtung der Kunststoffbehältnisse nachgeordnet ist. Dies bedeutet, dass die mit Hilfe der Umformungseinrichtung hergestellten Kunststoffbehältnisse anschließend mittels einer Fülleinrichtung befüllt werden.

Weiterhin wird eine Heizeinrichtung zum Erwärmen von Kunststoffvorformlingen offenbart, insbesondere für eine Vorrichtung der oben beschriebenen Art, wobei diese Heizeinrichtung eine Transporteinrichtung aufweist, welche mittels einer Vielzahl von Transportelementen die Kunststoffvorformlinge vereinzelt durch die Heizeinrichtung transportiert. Dabei weist die Vorrichtung eine Sperreinrichtung zum zeitweiligen Unterbrechung der Zuführung der Kunststoffvorformlinge an die Heizeinrichtung auf und diese Sperreinrichtung ermöglicht eine Unterbrechung der Zuführung für einzelne bzw. mehrere Kunststoffvorformlinge.

Die Heizeinrichtung weist eine Vielzahl von Heizelementen zum Erwärmen einzelner Kunststoffvorformlinge auf, wobei die Kunststoffvorformlinge diesen Heizelementen wenigstens zeitweise während des Erwärmungsvorgangs zuordenbar sind.

Daher wird auch hinsichtlich der Heizeinrichtung vorgeschlagen, dass bereits vor dem eigentlichen Heizvorgang einzelne Kunststoffvorformlinge oder auch Gruppen von wenigen Kunststoffvorformlingen, wie etwa von zwei oder drei Kunststoffvorformlingen, eine gewisse Zeit zurückgehalten werden, bis die nächste Mikrowellenstation (allgemein das nächste Heizelement) besetzt werden soll.

Die vorliegende Erfindung ist weiterhin auf ein Verfahren gemäß Anspruche 9 geriehtet.

Die Kunststoffvorformlinge werden individuell durch eine Vielzahl von Heizelementen erwärmt, wobei die Kunststoffvorformlinge diesen Heizelementen zugeordnet werden.

Damit wird auch verfahrensseitig vorgeschlagen, dass die Zufuhr der Kunststoffvorformlinge für einzelne Kunststoffvorformlinge gezielt unterbrochen werden kann, beispielsweise um auf Fehler in nachfolgenden Aggregaten zu reagieren. Durch die individuelle Erwärmung der Kunststoffvorformlinge wird außerdem ermöglicht, dass Lücken zwischen den Kunststoffvorformlingen gebildet werden können.

Vorzugsweise erfolgt daher die Unterbrechung der Zuführung für einzelne Kunststoffvorformlinge in Abhängigkeit von einem Fehlerzustand eines in einer Transportrichtung der Kunst-stoffvorformlinge nach der Heizeinrichtung angeordneten Aggregats. Bei diesem Aggregat kann es sich beispielsweise um eine Blaseinrichtung, eine Fülleinrichtung, eine Verschließeinrichtung, eine Etikettiereinrichtung, eine Sterilisiereinrichtung für die Kunststoffbehältnisse oder dergleichen handeln.

Vorteilhaft werden die Kunststoffvorformlinge vereinzelt den Heizelementen zugeführt und individuell von diesen Heizelementen erwärmt.

Bevorzugt erfolgt die Unterbrechung der Zuführung für einzelne Kunststoffvorformlinge (10) in Abhängigkeit der gewünschten Ausbringleistung der Vorrichtung (1).

Weitere Vorteile und Ausführungsformen ergeben sich aus den beigefügten Zeichnungen.

Darin zeigen:
- Fig. 1: eine Vorrichtung zum Herstellen von Kunststoffbehältnissen; und
- Fig. 2: eine weitere Darstellung der Vorrichtung aus Fig.1.

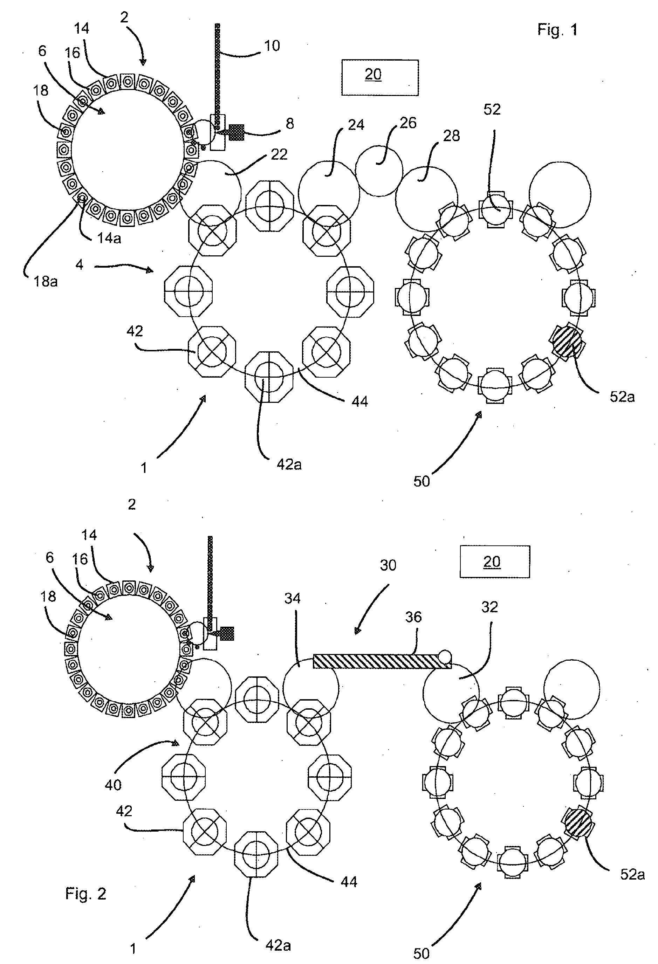

Fig. 1 zeigt eine in ihrer Gesamtheit mit 1 bezeichnete Vorrichtung zur Herstellung von Kunststoffbehältnissen. Dabei werden Kunststoffvorformlinge 10 beispielsweise aus einem Reservoir (nicht gezeigt) über ein Eintaktrad 11 einer insgesamt mit 2 bezeichneten Heizeinrichtung 2 zur Erwärmung der Kunststoffvorformlinge 10 zugeführt.

Die Heizeinrichtung 2 weist dabei eine Vielzahl von Heizelementen 18 auf, die jeweils zum individuellen Erwärmen der Kunststoffvorformlinge 10 dienen und die an einem drehbaren Träger 6 wie einem Heizrad angeordnet sind. Die Heizelemente 18 stellen hier auch jeweils Bestandteile von Transportelementen 14 auf, welche die Kunststoffvorformlinge während deren Erwärmung transportieren. Das Bezugszeichen 16 bezieht sich auf ein Wandungselement, welches während des Transports der Kunststoffbehältnisse 10 zwischen den einzelnen Kunststoffbehältnissen 10 angeordnet ist. Dabei ist dieses Wandungselement hier Bestandteil des Heizelements 18, es wäre jedoch auch denkbar, dass die Kunststoffvorformlinge zwar nicht in den jeweiligen Heizkavitäten durch die Heizeinrichtung 2 gefördert werden, jedoch während des Transports der Kunststoffvorformlinge 10 durch die Heizeinrichtung jeweils Wandungselemente zwischen den einzelnen Kunststoffvorformlingen angeordnet sind.

Das Bezugszeichen 8 bezieht sich auf eine Sperreinrichtung, welche die Sperrung der Zuführung der Kunststoffvorformlinge 10 für jeweils einzelne Kunststoffvorformlinge 10 veranlasst.

Ausgehend von der Heizeinrichtung 2 werden die Kunststoffbehältnisse 10 über eine Transporteinrichtung wie einen Transportstern 22 an eine Blaseinrichtung 4 übergeben. Diese Blaseinrichtung 4 weist dabei wiederum eine Vielzahl von Blasstationen 42 auf, welche ebenfalls mittels eines drehbaren Trägers 44 d.h. eines Blasrads transportiert werden. Ausgehend von der Blaseinrichtung 4 werden die Behältnisse über mehrere Transfersterne 24, 26, 28 an eine Fülleinrichtung 50 übergeben. Während dieses Transports können auch weitere Behandlungsschritte an den nunmehr fertig geblasenen Behältnissen vorgenommen werden wie etwa eine Sterilisation. Alternativ kann die Sterilisation bzw. eine weitere Sterilisation auch zwischen der Heizeinrichtung 2 und der Blaseinrichtung 4 stattgefunden haben. Vorteilhaft dabei ist, dass der Behälter noch in Form eines Kunststoffvorformlings vorliegt.

Die Fülleinrichtung 50 weist ebenfalls eine Vielzahl von Füllstationen 52 auf. Falls nun beispielsweise an einer Füllstation 52a eine Fehlfunktion auftritt, kann eine Steuerungseinrichtung 20 ermitteln, welche Blasstation 42a den Kunststoffvorformling expandiert, der schließlich in die Füllstation 52a gelangen wird. Des Weiteren kann auch das Transportelement 14a bzw. das Heizelement 18a ermittelt werden, welches denjenigen Kunststoffvorformling transportiert bzw. erwärmt, der letztlich zu der Füllstation 52a gelangen wird.

Falls beispielsweise eine der in Fig. 1 gezeigten 12 Füllstationen 52a fehlerhaft ist, kann an die Sperreinrichtung 8 die Anweisung gegeben werden, jeden 12-ten Kunststoffvorformling auszuschleusen und zwar jeweils denjenigen Kunststoffvorformlinge, welche als Behältnisse zu der Füllstation 52a gelangen werden. Falls sich die Anzahlen der Fülleinrichtungen 52, der Blasstationen 42 und der Heizelemente 14 unterscheiden, werden daher nicht jeweils bestimmte Heizelemente unbesetzt gelassen.

Durch die vorübergehende Stoppung der Kunststoffvorformlingzufuhr zur Heizeinrichtung noch vor deren Erwärmung können diese auch für einen späteren Heizprozess noch zur Verfügung stehen. Daneben können auch die jeweiligen betroffenen bzw. dann unbesetzten Blasstationen abgeschaltet werden, um eine Leerbeaufschlagung mit Blasluft zu vermeiden.

Daneben wäre es auch möglich, dass Fehler erst nach der Fülleinrichtung 50 auftreten und entsprechend mittels der Steuereinrichtung 20 ermittelt wird, welche vorausgehenden Blasstationen und Heizelemente jeweils abgeschaltet werden sollten und welche Kunststoffvorformlinge mittels der Sperreinrichtung zurückgehalten werden sollen. Mittels der Sperreinrichtung werden daher bereits in dem Eintaktstern 11 Lücken erzeugt. Während der gesamten Behandlung der Kunststoffvorformlinge bzw. -behältnisse werden diese also vereinzelt gefördert.

Wenn also nun kurzzeitig die Sperreinrichtung 8 geschlossen und danach sofort wieder geöffnet wird, hat dies zur Folge, dass genau eine oder mehrere Heizelemente keinen Kunststoffvorformling 10 bekommen. Daneben kann auch eine Heizstationsabschaltung derart abgestimmt und in die Steuerung der Anlage integriert sein, dass alle nachfolgenden Behandlungsstationen darauf reagieren können. Dies ist beispielsweise unter Verwendung eines Schieberegisters bzw. eines Schieberegistereintrags möglich. Umgekehrt kann auch mit Hilfe der Steuerung 20 gezielt so der Preformzufluss unterbrochen werden, dass eine bestimmte folgende Behandlungsstation 42, 52 kein Behältnis mehr behandeln muss.

Des weiteren wäre es auch denkbar, dass mit einem variablen Zwischenstern, der insbesondere als Puffer fungiert, über die Stationsabschaltung die Ausbringleistung variiert wird und so bei gleich bleibender Drehzahl und somit gleich bleibender Flaschenqualität die Ausbringleistung gedrosselt werden kann. Dies kann beispielsweise beim Hochfahren der Fülleinrichtung oder beim Verschweißen eines Etiketts erforderlich sein.

Fig. 2 zeigt eine weitere Ausführungsform einer Vorrichtung. Bei dieser Ausführungsform schließt sich an die Blaseinrichtung 40 eine Ausgleichseinrichtung 30 an, welche entstandene Lücken in dem Strom der hergestellten Kunststoffbehältnisse wieder schießt. Im Einzelnen ist hier ein Ausführrad 34 vorgesehen, welches die Kunststoffvorformlinge an eine Lufttransporteinrichtung 36 übergibt. In dieser Lufttransporteinrichtung 36 werden die Kunststoffvorformlinge in einer Reihe also nicht vereinzelt gefördert, wodurch sich ggfs. entstandene Lücken wieder schließen. Die nunmehr geschlossene Reihe wird über ein Zuführrad 32 der Fülleinrichtung 50 zugeführt. Es wäre jedoch auch möglich, eine derartige Ausgleichseinrichtung, etwa in Form eines Verteilsterns, zwischen der Heizeinrichtung 2 und der Blaseinrichtung 40 vorzusehen.

### Bezugszeichenliste

- 1: Vorrichtung
- 2: Heizeinrichtung
- 4: Blaseinrichtung
- 6: Träger, Heizrad
- 8: Sperreinrichtung
- 10: Kunststoffvorformling
- 11: Eintaktrad
- 14, 14a: Transportelement
- 16: Wandungselement
- 18, 18a: Heizelement
- 20: Steuerungseinrichtung
- 22: Transportstern
- 24, 26, 28: Transferstern
- 30: Ausgleichseinrichtung
- 34: Ausführrad
- 32: Zuführrad
- 36: Lufttransporteinrichtung
- 40: Blaseinrichtung
- 42, 42a: Blasstation
- 44: Träger
- 50: Fülleinrichtung
- 52, 52a: Füllstation

## Patentansprüche

1. Vorrichtung (1) zum Herstellen von Kunststoffbehältnissen mit einer Heizeinrichtung (2) zum Erwärmen von Kunstoffvorformlingen (10) und einer in einer Transportrichtung der Kunststoffvorformlinge (10) der Heizeinrichtung (2) nachgeordneten Umformungseinrichtung (4) zum Umformen von Kunststoffvorformlingen (10) zu Kunststoffbehältnissen und mit einer Transporteinrichtung (6), welche mittels einer Vielzahl von Transportelementen (14) die Kunststoffvorformlinge (10) vereinzelt durch die Heizeinrichtung (2) transportiert, wobei die Vorrichtung (1) eine Sperreinrichtung (8) zum zeitweiligen Unterbrechen der Zuführung der Kunststoffvorformlinge (10) an die Heizeinrichtung (2) aufweist, und die Sperreinrichtung (8) eine Unterbrechung der Zuführung für einzelne Kunststoffvorformlinge (10) ermöglicht.
**dadurch gekennzeichnet, dass**
die Heizeinrichtung (2) eine Vielzahl von Heizelementen (18) zum Erwärmen einzelner Kunststoffvorformlinge (10) oder Gruppen von Kunststoffvorformlingen (10) aufweist wobei die Heizelemente zum individuellen Erwärmen einzelner Kunststoffvorformlinge (10) oder Gruppen von Kunststoffvorformlingen (10) geeignet sind und die Vorrichtung eine Steuerungseinrichtung zum Steuern einer Ausstoßleistung der Vorrichtung (1) aufweist.

2. Vorrichtung (1) nach Anspruch 1,
**dadurch gekennzeichnet, dass** die Heizeinrichtung (2) eine Vielzahl von Wandungselementen aufweist, die während der Erwärmung der Kunststoffvorformlinge (10) zwischen den einzelnen Kunststoffvorformlingen (10) angeordnet sind.

3. Vorrichtung (1) nach Anspruch 2,
**dadurch gekennzeichnet, dass**
die Heizelemente (18) bewegbar angeordnet sind.

4. Vorrichtung (1) nach Anspruch 2,
**dadurch gekennzeichnet, dass**
die Heizelemente (18) Aufnahmeräume zum Aufnehmen der Kunststoffvorformlinge (10) aufweisen.

5. Vorrichtung (1) nach wenigstens einem der vorangegangenen Ansprüche,
**dadurch gekennzeichnet, dass**
die Steuerungseinrichtung in Abhängigkeit von einem Signal eines in der Transportrichtung der Kunststoffbehältnisse befindlichen Aggregats die Ausstoßleistung der Vorrichtung (1) steuert.

6. Vorrichtung (1) nach Anspruch 1,
**dadurch gekennzeichnet, dass**
die Heizeinrichtung (2) eine mikrowellenbasierte Heizeinrichtung (2) ist.

7. Vorrichtung (1) nach wenigstens einem der vorangegangenen Ansprüche,
**dadurch gekennzeichnet, dass**
die Umformungseinrichtung (4) eine Vielzahl von Blasstationen (42) zum Umformen der Kunststoffvorformlinge (10) aufweist und eine Zuordnungseinrichtung vorgesehen ist, die jedem Transportelement (14) eindeutig eine Blasstation (42) zuordnet.

8. Vorrichtung (1) nach wenigstens einem der vorangegangenen Ansprüche,
**dadurch gekennzeichnet, dass**
die Vorrichtung (1) eine Fülleinrichtung zum Befüllen der Behältnisse aufweist, wobei die Fülleinrichtung (50) der Umformungseinrichtung (4) in der Transportrichtung der Kunststoffbehältnisse (10) nachgeordnet ist.

9. Verfahren zum Erwärmen von Kunststoffvorformlingen (10), wobei die Kunststoffvorformlinge (10) mittels einer Vielzahl von Transportelementen (14) entlang eines vorgegebenen Transportpfades durch eine Heizeinrichtung (2) transportiert werden und die Kunststoffvorformlinge (10) wenigstens zeitweise während dieses Transports erwärmt werden, wobei durch eine Sperreinrichtung (8) eine Unterbrechung der Zuführung für einzelne Kunststoffvorformlinge (10) in die Heizeinrichtung (2) ermöglicht wird,
**dadurch gekennzeichnet, dass**
die Kunststoffvorformlinge (10) individuell durch eine Vielzahl von Heizelementen (18) erwärmt werden, wobei die Kunststoffvorformlinge (10) diesen Heizetementen (18)
zugeordnet werden wobei eine Ausstoßleistung einer Vorrichtung (1) nach wenigstens einem der Ansprüche 1 bis 8 mittels einer Steuerungseinrichtung eingestellt wird.

10. Verfahren nach Anspruch 9,
**dadurch gekennzeichnet, dass**
die Unterbrechung der Zuführung für einzelne Kunststoffvorformlinge (10) in Abhängigkeit von einem Fehlerzustand eines in einer Transportrichtung der Kunststoffvorformlinge (10) nach der Heizeinrichtung (2) angeordneten Aggregats erfolgt.

11. Verfahren nach Anspruch 9,
**dadurch gekennzeichnet, dass**
die Unterbrechung der Zuführung für einzelne Kunststoffvorformlinge (10) in Abhängigkeit der gewünschten Ausbringleistung der Vorrichtung (1) erfolgt.

## Claims

1. Apparatus (1) for manufacturing plastic containers with a heating device (2) for heating plastic preforms (10) and a shaping device (4) for shaping plastic preforms (10) into plastic containers, which shaping device is located downstream of the heating device (2) in a transportation direction of the plastic preforms (10), and with a transportation device (6), which transports the plastic preforms (10) separately through the heating device (2) by means of a multiplicity of transport elements (14), wherein the apparatus (1) is equipped with a stopper device (8) for temporary interruption of the flow of plastic preforms (10) to the heating device (2), and this stopper device (8) enables an interruption of the flow for individual plastic preforms (10),
**characterised in that**
the heating device (2) is equipped with a multiplicity of heating elements (18) to heat individual plastic preforms (10) or groups of plastic preforms (10), wherein the heating elements are suitable for individually heating individual plastic preforms (10) or groups of plastic preforms (10) and the apparatus is equipped with a control device for controlling an output rate of the apparatus (1).

2. Apparatus (1) according to claim 1,
**characterised in that** the heating device (2) is equipped with a multiplicity of wall elements, which are disposed between the individual plastic preforms (10) during the heating of the plastic preforms (10).

3. Apparatus (1) according to claim 2,
**characterised in that**
the heating elements (18) are displaceably disposed.

4. Apparatus (1) according to claim 2,
**characterised in that**
the heating elements (18) are equipped with reception chambers for receiving the plastic preforms (10).

5. Apparatus (1) according to at least one of the preceding claims, **characterised in that**
the control device controls the output rate of the apparatus (1) as a function of a signal from a unit located in the direction of transportation of the plastic preforms.

6. Apparatus (1) according to claim 1,
**characterised in that**
the heating device (2) is a microwave-based heating device (2).

7. Apparatus (1) according to at least one of the preceding claims, **characterised in that**
the shaping device (4) is equipped with a multiplicity of blow stations (42) for shaping the plastic preforms (10), and an assignment device is provided, which unequivocally assigns a blow station (42) to each of the transportation elements (14).

8. Apparatus (1) according to at least one of the preceding claims, **characterised in that**
the apparatus (1) is equipped with a filler device for filling the containers, wherein the filler device (50) is located downstream of the shaping device (4) in the transportation direction of the plastic containers (10).

9. Method of heating plastic preforms (10), wherein the plastic preforms (10) are transported along a predetermined transport path through a heating device (2) by means of a multiplicity of transportation elements (14) and the plastic preforms (10) are heated at least temporarily during this transportation, wherein an interruption in the flow into the heating device (2) is enabled by a stopper device (8) for individual plastic preforms (10), **characterised in that**
the plastic preforms (10) are heated individually by a multiplicity of heating elements (18), wherein the plastic preforms (10) are assigned to these heating elements (18), wherein an output rate of an apparatus (1) according to at least one of the claims 1 to 8 is set by means of a control device.

10. Method according to claim 9,
**characterised in that**
the interruption in flow for individual plastic preforms (10) takes place as a function of a fault status in a unit disposed downstream of the heating device (2) in a transportation direction of the plastic preforms (10).

11. Method according to claim 9,
**characterised in that**
the interruption of flow for individual plastic preforms (10) takes place as a function of the required production output of the apparatus (1).

## Revendications

1. Dispositif (1) de fabrication de contenants en plastique, comprenant un système de chauffage (2) pour chauffer des préformes en plastique (10) et un système de mise en forme (4) disposé en aval du système de chauffage (2) dans un sens de transport des préformes en plastiques (10), pour mettre en forme des préformes en plastique (10) en des contenants en plastique, et comprenant un système de transport (6), qui transporte, au moyen d'une pluralité d'éléments de transport (14), les préformes en plastique (10) de manière séparée, à travers le système de chauffage (2), dans lequel le dispositif (1) présente un système d'arrêt (8) pour interrompre par intermittence l'amenée des préformes en plastique (10) au système de chauffage (2), et le système d'arrêt (8) permet une interruption de l'amenée pour diverses préformes en plastique (10),
**caractérisé en ce que**
le système de chauffage (2) présente une pluralité d'éléments de chauffage (18) pour chauffer diverses préformes en plastique (10) ou divers groupes de préformes en plastique (10), dans lequel les éléments de chauffage sont adaptés pour chauffer de manière individuelle les diverses préformes en plastique (10) ou les divers groupes de préformes en plastique (10) et le dispositif présente un système de commande pour commander une puissance d'éjection du dispositif (1).

2. Dispositif (1) selon la revendication 1,
**caractérisé en ce que** le système de chauffage (2) présente une pluralité d'éléments de paroi, qui sont disposés entre les diverses préformes en plastique (10) au cours du chauffage des préformes en plastique (10).

3. Dispositif (1) selon la revendication 2,
**caractérisé en ce que**
les éléments de chauffage (18) sont disposés de manière à pouvoir être déplacés.

4. Dispositif (1) selon la revendication 2,
**caractérisé en ce que**
les éléments de chauffage (18) présentent des espaces de logement pour loger les préformes en plastique (10).

5. Dispositif (1) selon au moins l'une quelconque des revendications précédentes,
**caractérisé en ce que**
le système de commande commande, en fonction d'un signal d'un groupe se trouvant dans le sens de transport des contenants en plastique, la puissance d'éjection du dispositif (1).

6. Dispositif (1) selon la revendication 1,
**caractérisé en ce que**
le système de chauffage (2) est un système de chauffage (2) à base de micro-ondes.

7. Dispositif (1) selon au moins l'une quelconque des revendications précédentes,
**caractérisé en ce que**
le système de mise en forme (4) présente une pluralité de stations de soufflage (42) pour mettre en forme les préformes en plastique (10), et **en ce qu'**un système d'attribution est prévu, lequel attribue de manière claire une station de soufflage (42) à chaque élément de transport (14).

8. Dispositif (1) selon au moins l'une quelconque des revendications précédentes,
**caractérisé en ce que**
le dispositif (1) présente un système de remplissage pour remplir les contenants, dans lequel le système de remplissage (50) du système de mise en forme (4) est disposé en aval, dans le sens de transport, des contenants en plastique (10).

9. Procédé de chauffage de préformes en plastique (10), dans lequel les préformes en plastique (10) sont transportées, au moyen d'une pluralité d'éléments de transport (14), le long d'un chemin de transport prédéfini, par un système de chauffage (2) et les préformes en plastique (10) sont chauffées au moins en partie au cours dudit transport, dans lequel une interruption de l'amenée pour diverses préformes en plastique (10) dans le système de chauffage (2) est rendue possible par un système d'arrêt (8),
**caractérisé en ce que**
les préformes en plastique (10) sont chauffées de manière individuelle par une pluralité d'éléments de chauffage (18), dans lequel les préformes en plastique (10) sont associées auxdits éléments de chauffage (18), dans lequel une puissance d'éjection d'un dispositif (1) selon au moins l'une quelconque des revendications 1 à 8 est réglée au moyen d'un système de commande.

10. Procédé selon la revendication 9,
**caractérisé en ce que**
l'interruption de l'amenée pour diverses préformes en plastique (10) est effectuée en fonction d'un état de défaillance d'un groupe disposé dans un sens de transport des préformes en plastique (10) après le système de chauffage (2).

11. Procédé selon la revendication 9,
**caractérisé en ce que**
l'interruption de l'amenée pour diverses préformes en plastique (10) est effectuée en fonction de la puissance de distribution souhaitée du dispositif (1).
